# FASCICULE DE BREVET EUROPEEN

(11) **EP 2 617 040 B1**
(45) Date de publication et mention de la délivrance du brevet: **13.05.2015**
(21) Numéro de dépôt: 11773079.6
(22) Date de dépôt: 14.09.2011
(51) Int. Cl.: G21C 19/10, G21C 19/105, G21C 19/18, G21C 19/19, G21C 19/32

(54) **DISPOSITIF DE MANUTENTION À SEC D'ASSEMBLAGES DE COMBUSTIBLE NUCLÉAIRE**
VORRICHTUNG ZUR TROCKENHANDHABUNG VON KERNBRENNSTABBÜNDELN
DEVICE FOR THE DRY HANDLING OF NUCLEAR FUEL ASSEMBLIES

(30) Priorité: 15.09.2010 FR 1057356
(43) Date de publication de la demande: 24.07.2013
(73) Titulaire: Areva NP, 92400 Courbevoie (FR)
(72) Inventeur: CHASSIGNET, Mathieu Jean Maurice, 69100 Villeurbanne (FR); SCHERMESSER, Frédéric, Jean-Marie, F-69300 Caluire (FR)
(74) Mandataire: Blot, Philippe Robert Emile
(86) Numéro de dépôt international: PCT/FR2011/052095
(87) Numéro de publication internationale: WO 2012/035255

(56) Documents cités:
- FR-A1- 2 341 920
- FR-A1- 2 582 438
- US-A- 4 800 062
- US-A1- 2003 194 042

## Description

La présente invention concerne un dispositif de manutention à sec d'assemblages de combustible nucléaire.

L'invention concerne aussi bien le déchargement à sec d'assemblages de combustible nucléaire entreposés dans des alvéoles d'un château de transport, que le chargement à sec d'assemblages de combustible nucléaire dans les alvéoles d'un château de transport.

Les assemblages de combustible nucléaire sont formés par l'assemblage de crayons de faible diamètre par rapport à leur longueur. Ces crayons, au nombre de 200 à 300 par assemblage, sont formés par des gaines remplies de pastilles de combustible nucléaire, par exemple de MOX.

Ces assemblages ont une section rectangulaire de plusieurs dizaines de centimètres de côté et mesurent plusieurs mètres de long.

Chaque réacteur nucléaire doit être périodiquement mis à l'arrêt en vue de remplacer une partie des assemblages de combustible usés par des assemblages de combustible neufs.

Les assemblages de combustible neufs sont généralement réalisés dans une usine de fabrication des pastilles, et doivent être transportés vers les centrales nucléaires où ils seront placés dans une installation d'entreposage avant d'être transférés dans les réacteurs.

Le transport de ces assemblages entre l'usine de fabrication et la centrale nucléaire s'effectue au moyen d'un château de transport qui comporte des alvéoles dans chacun desquels est placé un assemblage de combustible neuf.

A l'arrivée à la centrale nucléaire, les assemblages de combustible neufs sont déchargés du château de transport et amenés dans l'installation d'entreposage constituée par une piscine de stockage, située à proximité du coeur du réacteur et dans la plupart des cas à un niveau supérieur au niveau d'arrivée des châteaux de transport des assemblages.

Le premier mode de contrôle de la réactivité d'un élément combustible est sa géométrie. La manutention d'un assemblage de combustible doit donc répondre à des critères de fiabilité élevés et notamment montrer que les conséquences d'une chute d'un assemblage sont acceptables et n'entraînent pas d'accident de criticité ou de conséquences non négligeables pour l'environnement.

Jusqu'à présent, quand on transfère les assemblages de combustible à partir d'un château de transport, ce château de transport est déplacé et amené à proximité de la piscine et chaque assemblage est retiré du château de transport et déposé dans cette piscine. Cette opération de levage du château à proximité de la piscine permet alors de limiter la hauteur de chute potentielle de l'assemblage. Le transfert est réalisé soit sous eau, soit à sec.

Dans le cas d'un transfert sous eau, le château de transport est retiré de l'engin de transport par des moyens de levage appropriés, comme par exemple un pont de manutention, et amené dans une piscine, ou un poste de déchargement, annexe à la piscine de stockage. La piscine annexe est alors remplie d'eau, puis chaque assemblage de combustible est retiré de son alvéole par les moyens de levage et déposé dans la piscine de stockage. Le déplacement des assemblages de combustible est effectué sous eau apportant ainsi une protection biologique adéquate aux opérateurs.

Ce transfert de combustible sous eau présente cependant un inconvénient car il est ensuite nécessaire de décontaminer le château et cette opération de décontamination expose les opérateurs à des doses de radioactivité.

Dans le cas d'un transfert à sec, comme par exemple décrit dans le FR 2 260 169, le château de transport est retiré de l'engin de transport par un chariot de levage porté par un pont roulant, puis déposé dans une zone conçue pour son stockage. Ensuite, l'assemblage de combustible est retiré du château de transport et hissé dans un conteneur de manutention blindé suspendu au chariot de levage et transporté ensuite dans la piscine. Des moyens de levage, comme par exemple un treuil et un organe de préhension fixé à l'extrémité libre d'une chaîne du treuil, permettent de hisser l'assemblage de combustible à l'intérieur du conteneur de manutention. L'assemblage de combustible est également transféré dans une zone d'inspection avant d'être déposé dans la piscine.

Un autre dispositif de manutention à sec d'assemblages de combustible nucléaire comprenant une hotte de transfert est connu du document US 4,800,062.

Toutes ces opérations sont longues et demandent des interventions humaines risquant de soumettre les opérateurs à des doses critiques.

De plus il est nécessaire à chaque fois de pouvoir hisser le château de transport au niveau de la piscine de stockage ce qui implique des contraintes sur l'installation du bâtiment de réception et des risques de chute du château lors de ces opérations.

Par ailleurs, le conteneur de manutention décrit dans le dispositif de déchargement à sec mentionné ci-dessus ne présente pas toutes les garanties de sécurité en cas de chute de l'assemblage de combustible du fait qu'il ne comporte pas d'éléments de fermeture à sa base, mais uniquement des moyens de serrage de l'assemblage de combustible dans le conteneur.

A cet effet, on connaît des conteneurs de manutention ou des hottes de transport comportant des éléments de fermeture à la base et principalement utilisés pour décharger des assemblages de combustible usagés d'une zone d'entreposage pour les stocker dans des conteneurs destinés à être transportés dans un autre lieu. L'élément de fermeture est formé notamment par une porte coulissante ou pivotante actionnée à distance. Cette solution est complexe à mettre en oeuvre du fait qu'elle nécessite tout un mécanisme d'actionnement de la porte coulissante ou pivotante.

L'invention a pour but de proposer un dispositif de manutention à sec d'assemblages de combustible qui évite ces inconvénients, simple mettre à oeuvre et adaptable sur des installations nouvelles ou existantes, tout en présentant toutes les garanties de sécurité inhérentes à la manutention des assemblages de combustible nucléaire.

L'invention a donc pour objet un dispositif de manutention à sec d'assemblages de combustible, caractérisé en ce qu'il comprend :
- une hotte de transfert apte à être reliée à des moyens de levage et comportant, d'une part, intérieurement un organe de préhension de l'assemblage de combustible à transférer, porté par un mécanisme de levage intégré intérieurement à la hotte et, d'autre part, un fond muni de clapets pivotant entre une position d'ouverture pour le passage de l'assemblage de combustible à transférer et une position de fermeture de la hotte, et
- une table d'indexage apte à être placée sur un château de transport et comportant des moyens de positionnement de la hotte sur une alvéole dudit château de transport et d'orientation de l'organe de préhension porté par ladite hotte par rapport audit assemblage de combustible.

Selon d'autres caractéristiques de l'invention :
- la hotte comprend une partie supérieure comportant un double système d'accrochage avec un crochet d'un ensemble de manutention, un corps contenant le mécanisme de levage intégré portant l'organe de préhension et une partie inférieure formée par le fond muni desdits clapets,
- le fond de la hotte comporte une ouverture centrale pour le passage de l'organe de préhension et de l'assemblage de combustible en position d'ouverture des clapets,
- chaque clapet est placé au-dessus du fond et est associé à au moins un élément de déplacement entre lesdites positions d'ouverture et de fermeture,
- ledit au moins un élément de déplacement est formé par au moins un pion coulissant dans le fond et comportant une première extrémité située en dessous du fond et une seconde extrémité en appui contre le clapet correspondant,
- les clapets ont une forme complémentaire les uns aux autres pour obturer l'ouverture centrale en position de fermeture de ces clapets,
- chaque clapet est formé par une plaque triangulaire dont la base est montée articulée sur le fond,
- le mécanisme de levage intégré à la hotte comprend un chariot déplaçable par coulissement dans le corps de la hotte par un ensemble de manutention,
- le dispositif comporte, entre la table d'indexage et le château de transport, une pièce d'adaptation dont la face interne présente un profil conjugué au bord périphérique du château et dont la face externe est adaptée aux dimensions standards de la table d'indexage,
- la table d'indexage comprend une pièce de support périphérique placée sur la pièce d'adaptation, un premier bouchon tournant à l'intérieur de la pièce de support, un deuxième bouchon tournant à l'intérieur du premier bouchon tournant et un troisième bouchon tournant sur le deuxième bouchon et formant un panier de réception de la hotte, les deuxième et troisième bouchons communiquant avec l'intérieur du château par une ouverture,
- l'axe du premier bouchon correspond à l'axe du château, l'axe du troisième bouchon correspond à l'axe de l'alvéole la plus extrême dans ledit château et l'axe du deuxième bouchon se situe à égale distance des axes des deux autres bouchons,
- le fond du troisième bouchon comporte autour de l'ouverture un rebord d'appui de la première extrémité de chaque élément de déplacement, et
- le deuxième bouchon comporte au-dessous du troisième bouchon, un manchon comportant un passage axial communiquant avec les ouvertures de ces bouchons, le passage axial déterminant une zone d'inspection de l'assemblage de combustible à transférer et étant munie de moyens de visualisation et d'éclairage.

D'autres caractéristiques et avantages de l'invention ressortiront de la description détaillée qui en est donnée ci-dessous, à titre indicatif et nullement limitatif, en référence aux figures annexées, parmi lesquelles :
- la Fig. 1 est une vue schématique en perspective d'un château de transport d'assemblages de combustible neufs dans un bâtiment de réception d'une centrale nucléaire,
- la Fig. 2 est une vue schématique en perspective d'un dispositif de manutention à sec des assemblages combustible du château de transport, conforme à l'invention,
- la Fig. 3 est une vue schématique en coupe axiale d'une hotte de transfert des assemblages de combustible du dispositif de déchargement conforme à l'invention,
- la Fig. 4 est une vue en coupe selon la ligne 4-4 de la Fig. 3,
- les Figs. 5 et 6 sont des demi-vues schématiques en perspective et en coupe verticale de la partie inférieure de la hotte avec les clapets respectivement en position de fermeture et en position d'ouverture,
- la Fig. 7 est une demi-vue schématique en perspective et en coupe verticale de la partie inférieure de la hotte avec l'organe de préhension de l'assemblage de combustible à transférer porté par un mécanisme de levage intégré à la hotte,
- la Fig. 8 est une demi-vue schématique en perspective et en coupe verticale d'une table d'indexage du dispositif de déchargement, conforme à l'invention,
- la Fig. 9 est une vue schématique de dessus de la table d'indexage, et
- les Figs. 10 à 13 sont des vues schématiques en perspective montrant les différentes étapes de transbordement d'un assemblage de combustible au moyen du dispositif de manutention, conforme à l'invention.

La description qui suit sera faite à titre d'exemple dans le cadre d'une utilisation du dispositif de manutention pour le déchargement des assemblages de combustible neufs d'un château de transport.

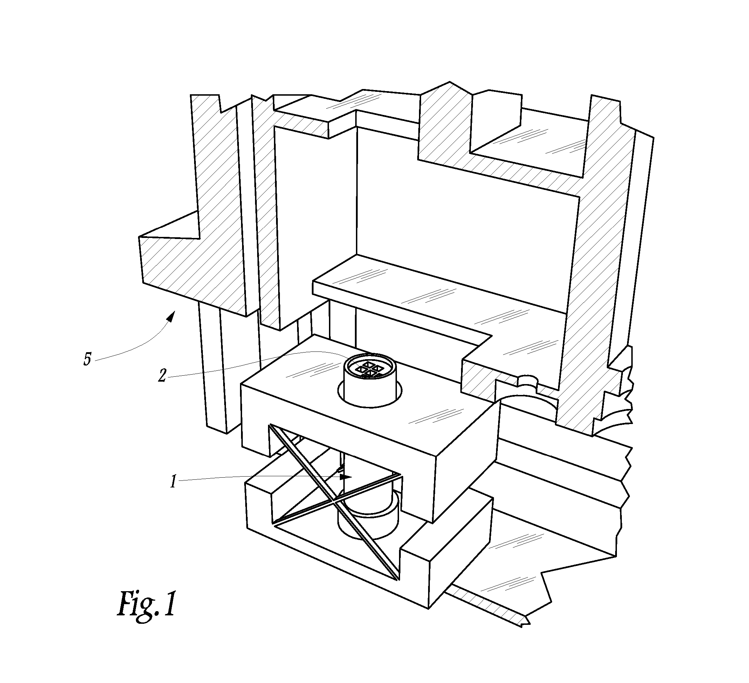

Les assemblages de combustible neufs sont transportés entre une usine de fabrication et une centrale nucléaire par un véhicule routier ou ferroviaire dans un château de transport 1 blindé, représenté schématiquement à la Fig.1.

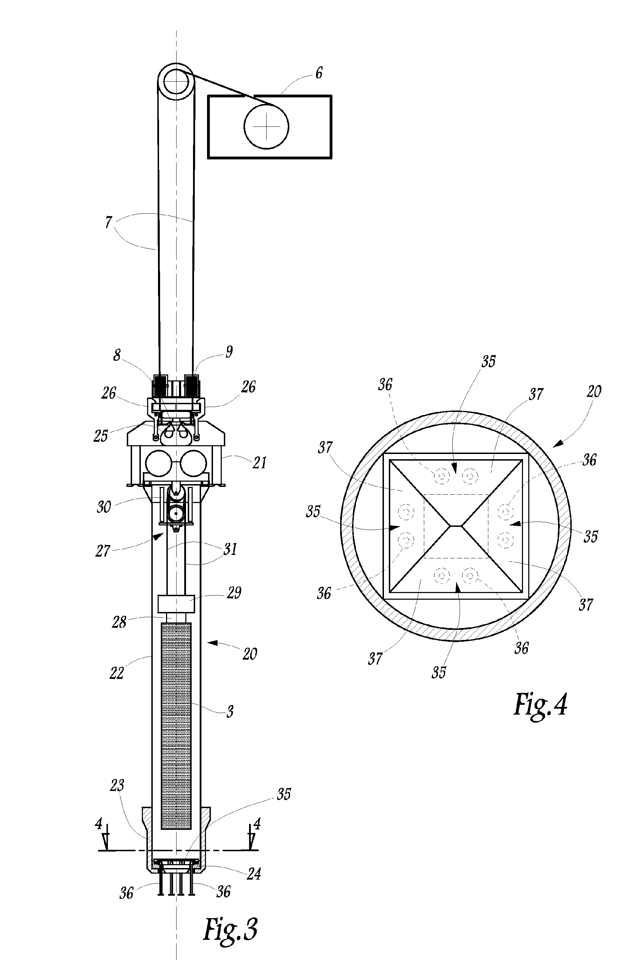

Le château de transport 1 comporte des alvéoles 2 dans chacun desquels est placé un assemblage de combustible 3 neuf (visible sur la Fig. 3).

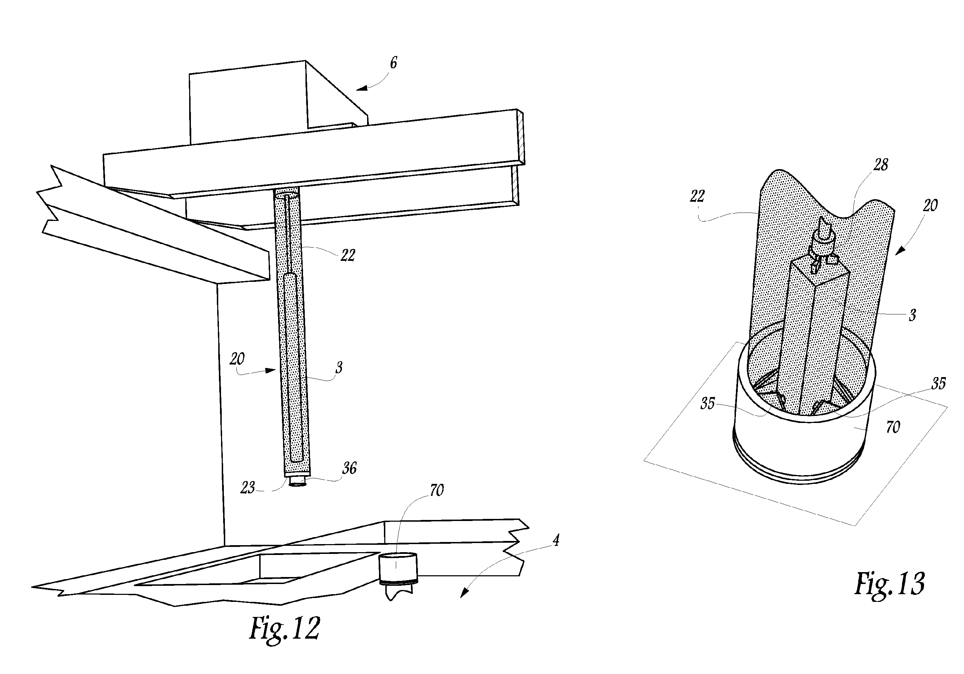

Dans la centrale nucléaire, les assemblages de combustible 3 neufs sont amenés vers les installations de conditionnement et d'entreposage et entreposés dans une piscine de stockage 4 (Fig. 12).

Pour effectuer le transfert des assemblages de combustible 3 neufs du château de transport 1 jusqu'à la piscine de stockage 4, ce château de transport 1 est amené dans un bâtiment 5 qui comporte un pont roulant 6 (Fig. 12) et dans lequel est disposée la piscine 4.

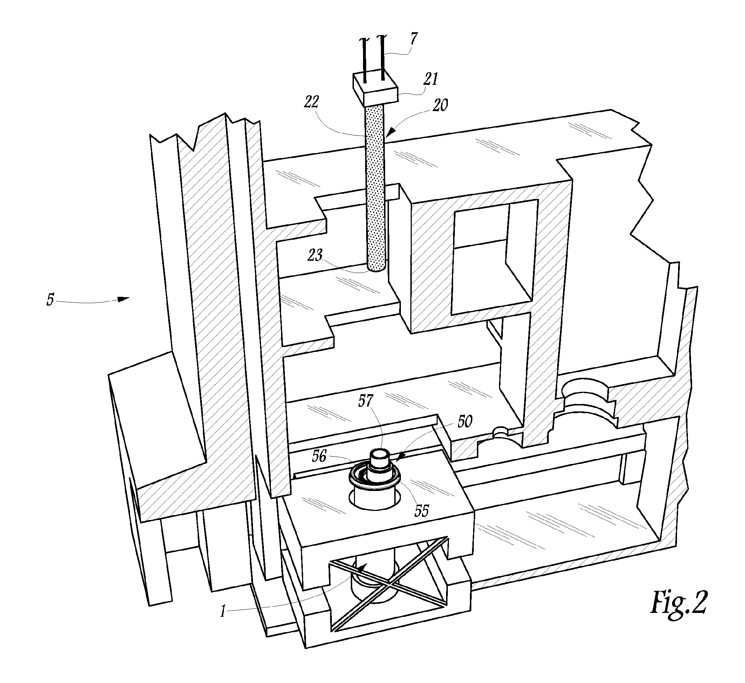

Le transfert de chaque assemblage de combustible 3 est effectué au moyen d'un dispositif de déchargement à sec représenté à la Fig. 2.

Ce dispositif de déchargement se compose de deux éléments principaux, à savoir :
- une hotte de transfert 20 apte à être reliée à des moyens de levage, comme par exemple le pont roulant 6, et
- une table d'indexage 50 apte à être placée sur le château de transport 1.

En se reportant maintenant aux Figs. 3 à 7, on va décrire la hotte de transfert 20.

La hotte 20 comprend une partie supérieure 21 d'accrochage avec le pont roulant 6 comportant un crochet 8 relié par des chaînes ou des câbles 7 au pont roulant 6, un corps 22 formant un fourreau de réception de l'assemblage de combustible 3 pendant son transfert et une partie inférieure 23 comportant un fond 24 qui sera décrit ultérieurement.

La partie supérieure 21 comprend un double système d'accrochage constitué par un organe 25 de fixation sur le crochet 8 et par des griffes 26 de fixation sur le support 9 de ce crochet 8.

Le corps 22 de la hotte 20 est pourvu intérieurement d'un mécanisme de levage intégré 27 portant un organe de préhension 28 de l'assemblage de combustible 3.

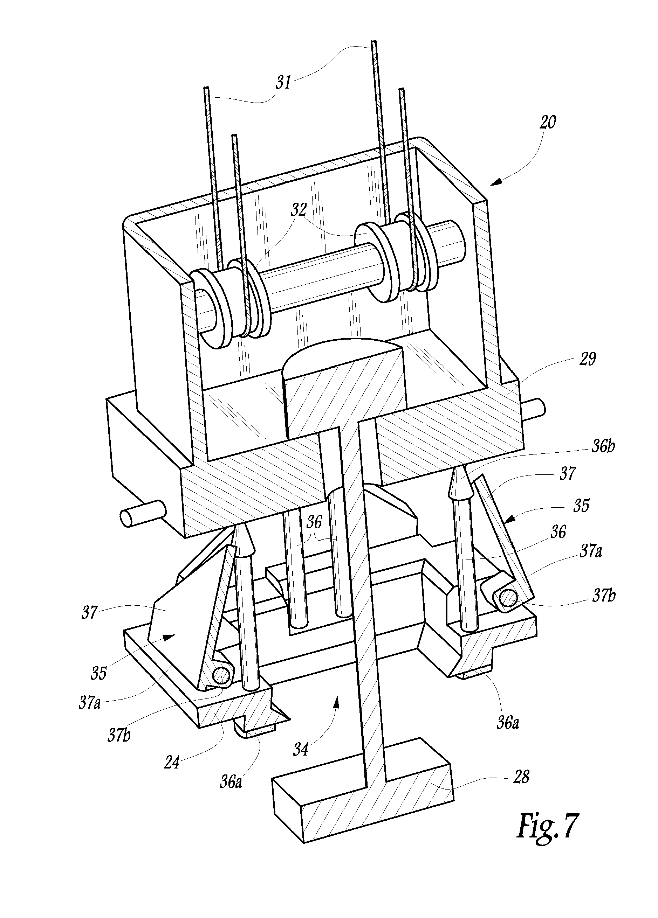

Ainsi que représenté à la Fig. 7, le mécanisme de levage intégré 27 comprend un chariot 29 portant l'organe de préhension formé par exemple par un grappin 28 de type connu, le chariot 29 étant guidé et déplacé par coulissement dans le corps 22 par un ensemble de manutention comprenant par exemple un treuil 30 muni de chaînes 31 coopérant avec des poulies 32 portées par le chariot 29.

Comme montré sur les Figs 3 et 7, l'ensemble du mécanisme de levage 27, c'est-à-dire le chariot 29, le treuil 30, les chaînes 31 et les poulies 32 est intégré dans le corps 22 de la hotte 20 ce qui évite toute communication avec l'extérieur de ladite hotte.

Le mécanisme de levage 27 est dédié au levage et à la descente de l'assemblage de combustible 3 à transférer et est distinct du pont roulant 6 utilisé généralement pour la manutention d'objets plus lourds. Le mécanisme de levage 27 intégré à la hotte a par exemple une capacité de levage de l'ordre d'1 tonne alors que le pont roulant 6 à une capacité de levage de l'ordre de 20 tonnes. Le mécanisme 27 présente donc une précision bien plus grande que le pont roulant.

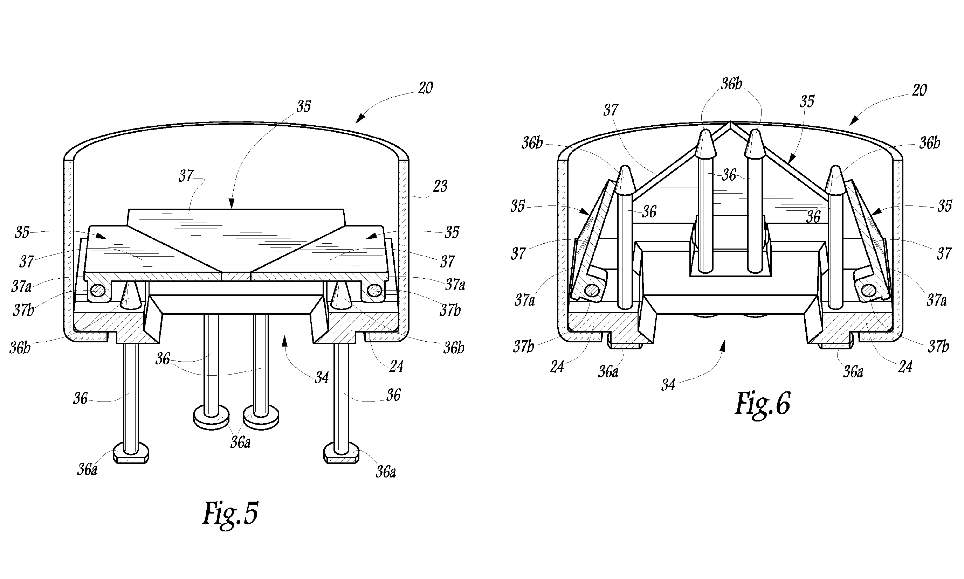

Comme cela apparaît sur les Figs. 4 à 6, le fond 24 de la partie inférieure 23 de la hotte 20 est muni de clapets 35 pivotant entre une position d'ouverture (Fig. 6) pour le passage de l'assemblage de combustible 3 à transférer et une position de fermeture (Fig. 5) du corps 22 de la hotte 20. Ce fond 24 comporte une ouverture centrale 34 pour le passage de l'organe de préhension 28 et de l'assemblage de combustible 3 lorsque les clapets 35 se trouvent en position d'ouverture, comme montré à la Fig. 6.

Dans l'exemple de réalisation illustré par les Figs. 4 à 6, chaque clapet 35 est placé au-dessus du fond 24 et associé à au moins un élément de déplacement 36 entre les positions d'ouverture et de fermeture. Chaque élément de déplacement est formé par un pion 36 coulissant dans le fond 24 et comportant une première extrémité 36a située en dessous du fond 24 et une seconde extrémité 36b en appui contre le clapet 35 correspondant.

Ainsi que montré plus particulièrement sur les Figs. 4 à 6, les clapets 35 ont une forme complémentaire pour obturer l'ouverture centrale 34 en position de fermeture de ces clapets 35 et chaque clapet 35 est formé par une plaque triangulaire 37 dont la base 37a est montée articulée par l'intermédiaire d'un axe 37b sur le fond 24 de la hotte 20.

Les clapets 35 se referment automatiquement par retour gravitaire ou sous l'effet d'un ressort de torsion, non représenté, disposé sur l'axe 37b de chaque plaque 37.

On notera que l'exemple de réalisation illustré sur les figures n'est qu'un exemple parmi d'autre de système de fermeture automatique de la hotte par clapets. En effet, les clapets peuvent avoir une forme différente, par exemple rectangulaire. Ils peuvent être au nombre de 2 ou davantage. Ils ne sont pas nécessairement de forme complémentaire, ils peuvent aussi être disposés de manière à se superposer les uns sur les autres lorsqu'ils se referment ou bien ne pas se jointer parfaitement. En revanche, les clapets doivent reposer directement ou via une pièce intermédiaire sur une surface de la hotte, par exemple sur le fond 24, pour assurer une reprise de la charge en cas de chute d'un assemblage dans la hotte. De même, les éléments de déplacement des clapets peuvent avoir d'autre forme que les pions 36 et ils peuvent être plus ou moins nombreux. Les pions peuvent notamment être reliés entre eux du côté de leur première extrémité 36a pour ne former qu'une seule pièce.

La hotte de transfert 20 apporte à l'assemblage de combustible 3 au cours de son transport une protection mécanique contre les impacts latéraux et permet de résister à la chute éventuelle d'un assemblage de combustible et de limiter la hauteur de chute possible quand la hotte 20 est fermée à sa base par les clapets 35. Cette hotte 20 permet également d'orienter le grappin 28, ainsi que cela sera décrit ultérieurement.

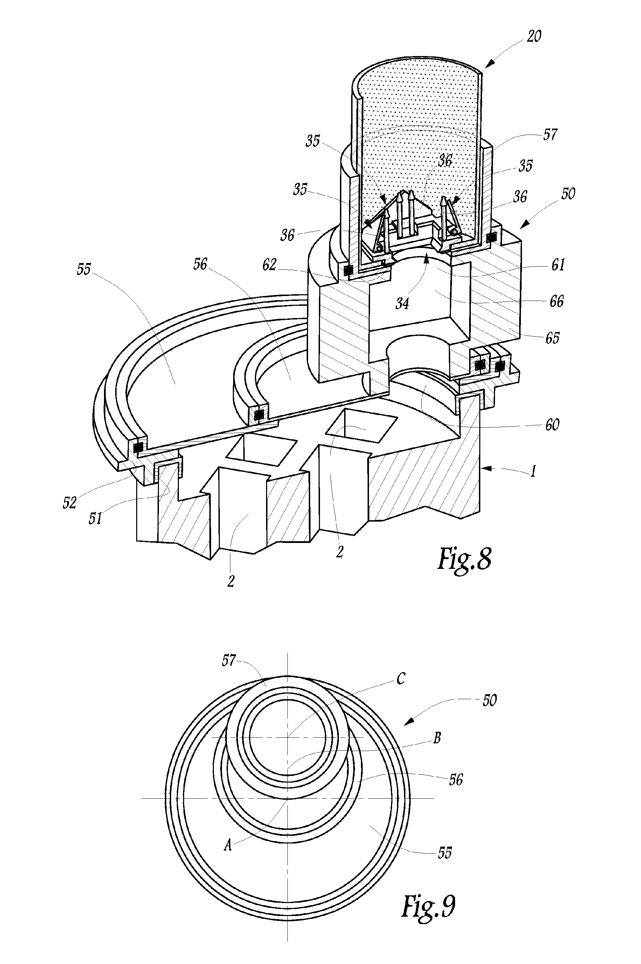

En se reportant particulièrement à la Fig. 8, on va maintenant décrire la table d'indexage 50.

Cette table d'indexage 50 a pour but de s'adapter aux différents châteaux de transport et de positionner directement la hotte 20 en face de l'alvéole 2 correspondant à l'assemblage de combustible 3 à transférer, de supporter cette hotte 20 pendant les opérations de levage de l'assemblage de combustible 3 et de permettre l'inspection de cet assemblage de combustible 3 à sa sortie du château de transport 1.

Pour cela, une pièce d'adaptation 51 est interposée entre la table d'indexage 50 et le château de transport 1 et cette pièce d'adaptation 51 a une face interne présentant un profil conjugué au bord périphérique du château et une face externe adaptée aux dimensions standards de la table d'indexage 50.

Dans l'exemple de réalisation représenté à la Fig. 8, cette pièce d'adaptation 51 présente une section transversale en forme de U inversé. L'étanchéité entre la pièce d'adaptation 51 et le bord périphérique du château est assurée par exemple par deux joints toriques, non représentés, ou par tout autre organe approprié.

Le positionnement correct de la hotte 20 en face de la bonne alvéole 2 renfermant l'assemblage de combustible 3 à transférer est réalisé par la table d'indexage 50 qui comporte :
- un premier bouchon 55 tournant à l'intérieur d'une pièce de support 52,
- un deuxième bouchon 56 tournant à l'intérieur du premier bouchon 55, et
- un troisième bouchon 57 tournant sur le deuxième bouchon 56.

La pièce de support 52 réalise l'interface avec la pièce d'adaptation 51 et est donc fixe par rapport au château 1. Le supportage des bouchons 55, 56 et 57 peut par exemple être assuré par des roulements à rouleaux, non représentés, guidés par des rails, par exemple en acier ou par tout autre système approprié de type connu, assurant un bon positionnement de la hotte 20 et assurant également la reprise du poids de l'ensemble constitué par la hotte 20 avec le mécanisme de levage intégré et également de l'assemblage de combustible 3 à transférer. L'étanchéité entre chaque bouchon est assurée par un ensemble de deux joints toriques, non représentés, ou par tout autre organe d'étanchéité adapté.

Ainsi que montré à la Fig. 9, l'axe A du premier bouchon 55 correspond à l'axe du château 1, l'axe C du troisième bouchon 57 correspond à l'axe de l'alvéole 2 la plus extérieure dans le château 1 et l'axe B du deuxième bouchon 56 se situe à égale distance entre les axes A et C des deux autres bouchons 55 et 57. De cette manière, la hotte 20 peut être placée sur toutes les positions des alvéoles 2 du château de transport 1.

Le deuxième bouchon 56 communique avec l'intérieur du château 1 par une ouverture 60 et le troisième bouchon 57 communique avec l'intérieur du château 1 par une ouverture 61, les ouvertures 60 et 61 étant coaxiales.

Comme montré à la Fig. 8, le troisième bouchon 57 forme un panier de réception de la hotte 20 et comporte à sa partie supérieure des portées coniques, non représentées, permettant le guidage de la hotte 20 lors de son positionnement dans le troisième bouchon 57. Lorsque la hotte 20 est accostée dans le troisième bouchon 57, cette hotte 20 est en liaison en rotation avec le troisième bouchon 57, soit par son propre poids, soit par un dispositif de liaison momentané, non représenté, de type connu. La rotation du troisième bouchon 57 permet de tourner la hotte 20 d'un angle de l'ordre de 45° pour que le grappin 28 soit bien aligné avec l'assemblage de combustible 3 à transférer.

Pour permettre l'ouverture des clapets 35, le fond du troisième bouchon 57 comporte autour de l'ouverture 61, un rebord 62 d'appui de la première extrémité 36a de chaque pion 36. La hotte 20 est munie d'un ensemble de joints toriques, non représentés, en partie basse pour maintenir le confinement du château 1.

Comme le montre la Fig. 8, le deuxième bouchon 56 comporte au-dessous du troisième bouchon 57, un manchon 65 comportant un passage axial 66 communiquant avec les ouvertures 60 et 61 de ces bouchons, respectivement 56 et 57. Le passage axial 66 détermine une zone d'inspection de l'assemblage de combustible 3 à transférer et cette zone est équipée de moyens de visualisation, comme par exemple des caméras et des moyens d'éclairage, non représentés. Plusieurs caméras peuvent être implantées sur un même niveau. La rotation du deuxième bouchon 56 permet de visualiser la périphérie de l'assemblage de combustible 3 au cours de son transfert.

Le déchargement des assemblages de combustible 3 neufs est réalisé de la façon suivante.

Le château de transport 1 contenant les assemblages de combustible 3 neufs est amené par son propre véhicule de transport dans le bâtiment 5 de la centrale nucléaire.

Les opérateurs procèdent à la mise en condition de décharnement du château 1 et des assemblages de combustible 3.

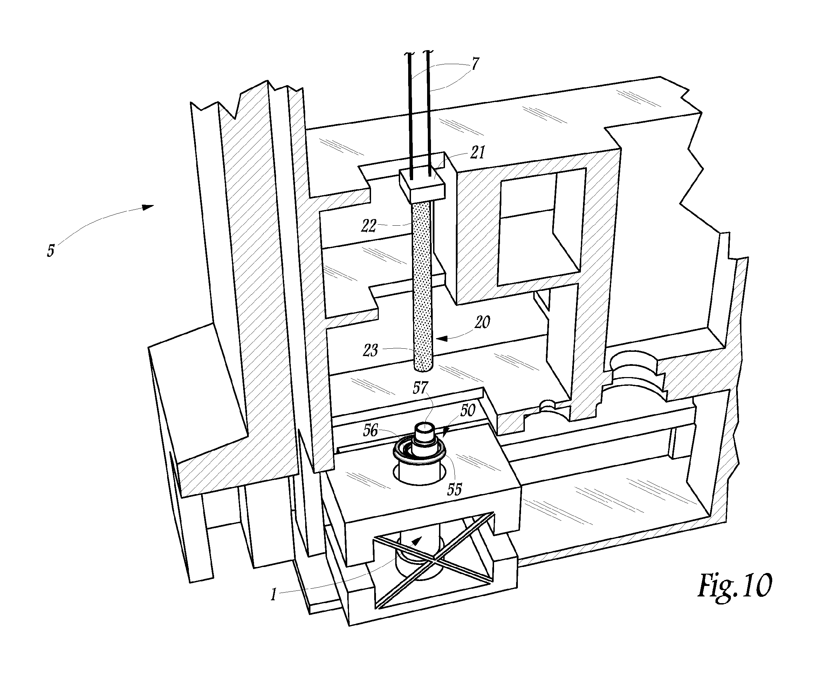

Tout d'abord, la pièce d'adaptation 51 adaptée au château de transport 1 est placée sur celui-ci et l'ensemble de la table d'indexage 50 comportant la pièce de support 52 et les bouchons, respectivement 55, 56 et 57 est posé sur la pièce d'adaptation 51, comme montré à la Fig. 10.

Les bouchons 55 et 56 sont entraînés en rotation pour placer les ouvertures 60 et 61 dans l'axe de l'alvéole 2 contenant l'assemblage de combustible 3 à transférer.

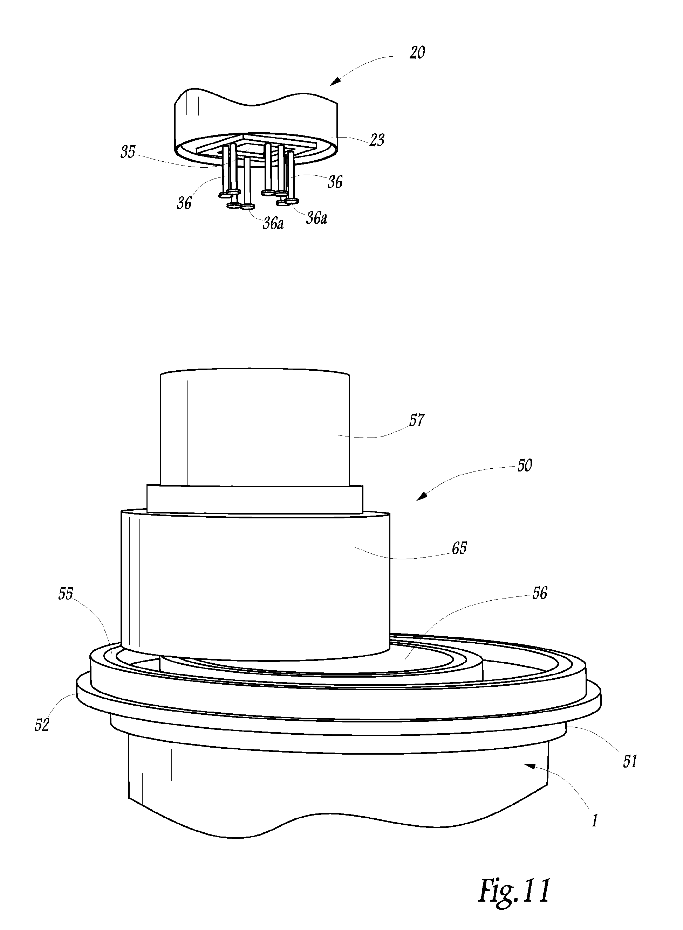

Ensuite, la hotte 20 est amenée par le pont roulant 6 au-dessus du troisième bouchon 57, ainsi que représenté sur les Figs. 10 et 11.

Au cours du déplacement de la hotte 20, les clapets 35 sont en position de fermeture et les extrémités 36a des pions 36 sont en saillie au-dessous du fond 24 de la hotte 20.

Cette hotte 20 est descendue progressivement dans le troisième bouchon 57 de façon à amener les extrémités 36a des pions 36 au contact du rebord d'appui 62 ménagé autour de l'ouverture 61 de ce troisième bouchon 57.

Les extrémités 36a des pions 36 entrent en contact avec ce rebord d'appui 62 et les pions 36 soulèvent les clapets 35, comme montré sur les Figs. 6 et 8 afin de mettre en communication l'intérieur de la hotte 20 avec l'alvéole 2 contenant l'assemblage de combustible 3 à transférer.

Le troisième bouchon 57 est entraîné en rotation pour faire pivoter la hotte 20 et orienter ainsi le grappin 28 dans la position appropriée pour saisir l'assemblage de combustible 3.

Cet assemblage de combustible 3 est agrippé par le grappin 28 et progressivement soulevé par les chaînes 31 entraînées par le treuil 30. En cas de chute de l'assemblage de combustible dans le château 1, le confinement statique est apporté par la table d'indexage 50 et la hotte 20.

Les chaînes de levage 31 sont adaptées à la manutention d'assemblages de combustible et présentent une haute fiabilité et sont équipées notamment de détecteurs de surcharge et de survitesse.

Lors de son passage dans la zone 66 délimitée par le manchon 65, l'assemblage de combustible 3 subit une inspection visuelle ce qui évite d'avoir à transporter cet assemblage de combustible 3 dans une salle d'inspection spécifique.

L'assemblage de combustible 3 est amené progressivement à l'intérieur de la hotte 20 et dès qu'il est placé dans celle-ci, les moyens de levage du pont roulant 6 soulève la hotte 20 qui s'écarte du fond 62 du troisième bouchon 57. Dès que la hotte 20 s'écarte de ce fond 62, les clapets 35 se ferment assurant ainsi le confinement de l'assemblage de combustible 3 dans la hotte 20. Cette hotte 20 assure la protection contre d'éventuels impacts latéraux et limite la hauteur d'une éventuelle chute de l'assemblage de combustible 3 quand celui-ci se trouve dans ladite hotte, comme montré à la Fig. 12.

La hotte 20 contenant l'assemblage de combustible 3 est déplacée horizontalement par le pont roulant 6 et amenée vers les installations de conditionnement et d'entreposage des assemblages neufs, puis dans la piscine 4 de stockage.

Ainsi que montré sur les Figs. 12 et 13, cette piscine 4 est équipée d'un panier 70 de réception de la partie inférieure de la hotte 20 qui comporte, de manière identique au troisième bouchon 57, une surface d'appui de l'extrémité 36a des pistons 36 de façon à permettre l'ouverture des clapets 35 lorsque la hotte 20 est placée dans le panier 70. Le fond de ce panier 70 est également pourvu d'une ouverture, non représentée, pour permettre le passage de l'assemblage de combustible 3 à déposer dans la piscine 4. Cet assemblage de combustible 3 est progressivement descendu dans la piscine 4 au moyen du grappin 28, des chaînes 31 et du treuil 30 de la hotte 20.

L'assemblage de combustible 3 neuf est alors déposé dans la piscine de stockage 4.

Le dispositif de manutention à sec d'assemblages de combustible neufs permet de limiter les risques de chute ou de dégradation de ces assemblages en utilisant, d'une part, pour la manutention un équipement dédié et offrant une protection mécanique lors de la manutention et, d'autre part, en ayant en aucun cas besoin de procéder au levage du château de transport.

La fiabilité du levage est de plus accrue en ayant une hotte de transport manutentionnée par un pont dont la charge maximale est bien supérieure au poids de la hotte et en ayant un accrochage redondant entre la hotte et le pont.

Le dispositif de manutention selon l'invention présente également l'avantage de limiter les conséquences d'une éventuelle chute de l'assemblage de combustible soit en limitant la hauteur des possibles chutes, soit en apportant dans certaines parties des étapes de déchargement, un confinement statique supplémentaire. La hotte protège par ailleurs l'assemblage de combustible contre les chocs latéraux qui pourraient intervenir pendant la phase de manutention.

Le dispositif de l'invention peut s'adapter aussi bien sur une installation nouvelle qu'une installation existante étant donné qu'il n'implique pas ou peu de modifications pour les matériels existants et il permet de limiter les débits de dose pour les opérateurs du fait que le déchargement s'effectue à sec ce qui évite de décontaminer le château de transport et limite les besoins en intervention humaine.

Bien que le dispositif de manutention à sec d'assemblages de combustibles nucléaires qui vient d'être décrit soit particulièrement bien adapté au déchargement de combustibles neuf contenant du MOX, il peut avantageusement être utilisé également pour la manutention de combustible usagé. En particulier lorsque des assemblages de combustibles usagés doivent être transportés dans des usines de retraitement du combustible au moyen d'un château de transport.

## Revendications

1. Dispositif de manutention à sec d'assemblages de combustible nucléaire (3), comprenant:
- une hotte de transfert (20) apte à être reliée à des moyens (6) de levage, et
- une table d'indexage (50) apte à être placée sur un château de transport (1)
**caractérisé en ce que** la hotte de transert (20) comporte, d'une part, intérieurement un organe de préhension (28) de l'assemblage de combustible (3) à transférer, porté par un mécanisme (29, 30, 31) de levage intégré intérieurement à la hotte et, d'autre part, un fond (24) muni de clapets (35) pivotant entre une position d'ouverture pour le passage de l'assemblage de combustible (3) à transférer et une position de fermeture de la hotte (20), et **en ce que** la table d'indexage (50) comporte
des moyens (51, 52, 55, 56, 57) de positionnement de la hotte (20) sur une alvéole (2) dudit château de transport (1) et d'orientation de l'organe de préhension (28) porté par ladite hotte (20) par rapport audit assemblage de combustible (3).

2. Dispositif selon la revendication 1, **caractérisé en ce que** la hotte (20) comprend une partie supérieure (21) comportant un double système d'accrochage (25, 26) avec un crochet des moyens (6) de levage, un corps (22) contenant le mécanisme de levage intégré (29, 30, 31) portant l'organe de préhension (28) et une partie inférieure (23) formée par le fond (24) munie desdits clapets (35).

3. Dispositif selon la revendication 1 ou 2, **caractérisé en ce que** le fond (24) de la hotte (20) comporte une ouverture centrale (34) pour le passage de l'organe de préhension (28) et de l'assemblage de combustible (3) en position d'ouverture des clapets (35).

4. Dispositif selon l'une quelconque des revendications précédentes, **caractérisé en ce que** chaque clapet (35) est placé au-dessus du fond (24) et est associé à au moins un élément de déplacement (36) entre lesdites positions d'ouverture et de fermeture.

5. Dispositif selon la revendication 4, **caractérisé en ce que** ledit au moins un élément de déplacement est formé par au moins un pion (36) coulissant dans le fond (24) et comportant une première extrémité (36a) située en dessous du fond (24) et une seconde extrémité (36b) en appui contre le clapet (35) correspondant.

6. Dispositif selon l'une quelconque des revendications 3 à 5, **caractérisé en ce que** les clapets (35) ont une forme complémentaire les uns aux autres pour obturer l'ouverture centrale (34) en position de fermeture.

7. Dispositif selon la revendication 6, **caractérisé en ce que** chaque clapet (35) est formé par une plaque triangulaire (37) dont la base (37a) est montée articulée sur le fond (24).

8. Dispositif selon l'une quelconque des revendications 2 à 7, **caractérisé en ce que** le mécanisme de levage intégré à la hotte comprend un chariot (29) déplaçable par coulissement dans le corps (22) de la hotte (20) par un ensemble de manutention (30, 31).

9. Dispositif selon l'une quelconque des revendications précédentes, **caractérisé en ce qu'**il comporte entre la table d'indexage (50) et le château de transport (1), une pièce d'adaptation (51) dont la face interne présente un profil conjugué au bord périphérique du château (1) et dont la face externe est adaptée aux dimensions standards de la table d'indexage (50).

10. Dispositif selon l'une quelconque des revendications précédentes, **caractérisé en ce que** la table d'indexage (50) comprend une pièce de support (52) périphérique placée sur la pièce d'adaptation (51), un premier bouchon (55) tournant à l'intérieur de la pièce de support (52), un deuxième bouchon (56) tournant à l'intérieur du premier bouchon (55) et un troisième bouchon (57) tournant sur le deuxième bouchon (56) et formant un panier de réception de la hotte (20), les deuxième et troisième bouchons (56, 57) communiquant avec l'intérieur du château (1) par une ouverture (60, 61).

11. Dispositif selon la revendication 10, **caractérisé en ce que** l'axe A du premier bouchon (55) correspond à l'axe du château (1), l'axe C du troisième bouchon (57) correspond à l'axe de l'alvéole (2) la plus externe dans le château (1) et l'axe B du deuxième bouchon (56) se situe à égale distance des axes des deux autres bouchons (55, 57).

12. Dispositif selon la revendication 10 ou 11, **caractérisé en ce que** le fond du troisième bouchon (57) comporte autour de l'ouverture (61), un rebord (62) d'appui de la première extrémité de chaque élément de déplacement (36).

13. Dispositif selon l'une quelconque des revendications 10 à 12, **caractérisé en ce que** le deuxième bouchon (56) comporte au-dessous du troisième bouchon (57), un manchon (65) comportant un passage axial (66) communiquant avec les ouvertures (60, 61) de ces bouchons (56, 57), le passage axial (61) déterminant une zone d'inspection de l'assemblage de combustible (3) à transférer et étant muni de moyens de visualisation et d'éclairage.

14. Utilisation du dispositif de manutention selon l'une quelconque des revendications précédentes pour le déchargement à sec d'assemblages de combustible nucléaire (3) entreposés dans des alvéoles (2) d'un château de transport (1).

15. Utilisation du dispositif de manutention selon l'une quelconque des revendications 1 à 13 pour le chargement à sec d'assemblages de combustible nucléaire (3) dans des alvéoles (2) d'un château de transport (1).

## Patentansprüche

1. Vorrichtung zur trockenen Handhabung von Kernbrennstoffanordnungen (3), aufweisend:
- eine Transferhaube (20), welche in der Lage ist an Hebemitteln (6) befestigt zu werden, und
- einen Indexierungstisch (50), welcher in der Lage ist auf einem Transportbehälter (1) platziert zu werden,
**dadurch gekennzeichnet, dass** die Transferhaube (20) aufweist zum einen im Inneren ein Greiforgan (28) für die zu verlagernde Brennstoffanordnung (3), welches durch einen Hebemechanismus (29, 30, 31) getragen wird, der im Inneren in der Haube integriert ist, und zum anderen einen Boden (24), welcher mit Klappen (35) ausgestattet ist, die zwischen einer Offen-Position, um die zu verlagernden Brennstoffanordnung (3) hindurchtreten zu lassen, und einer Geschlossen-Position der Haube (20) schwenkbar sind, und dadurch, dass der Indexierungstisch (50) aufweist
Mittel (51, 52, 55, 56, 57) zur Positionierung der Haube (20) über einer Zelle (2) des besagten Transportbehälters (1) und zur Ausrichtung des Greiforgans (28), welches von der besagten Haube (20) getragen wird, in Bezug auf die Brennstoffanordnung (3).

2. Vorrichtung gemäß Anspruch 1, **dadurch gekennzeichnet, dass** die Haube (20) aufweist einen oberen Abschnitt (21), der ein Doppelkupplungssystem (25, 26) mit einem Greifer der Hebemittel (6) aufweist, einen Körper (22), der den integrierten Hebemechanismus (29, 30, 31), welcher das Greiforgan (28) trägt, aufweist, und einen unteren Abschnitt (23), der durch den Boden (24) geformt ist und mit den besagten Klappen (35) ausgestattet ist.

3. Vorrichtung gemäß Anspruch 1 oder 2, **dadurch gekennzeichnet, dass** der Boden (24) der Haube (20) eine zentrale Öffnung (34) zum Hindurchtreten des Greiforgans (28) und der Brennstoffanordnung (3) aufweist, wenn sich die Klappen (35) in der Offen-Position befinden.

4. Vorrichtung gemäß irgendeinem der vorhergehenden Ansprüche, **dadurch gekennzeichnet, dass** jede Klappe (35) oberhalb des Bodens (24) platziert ist und mit zumindest einem Bewegungselement (36) zwischen der besagten Offen-Position und der besagten Geschlossen-Position assoziiert ist.

5. Vorrichtung gemäß Anspruch 4, **dadurch gekennzeichnet, dass** das besagte zumindest eine Bewegungselement aus einem Stab (36) geformt ist, welcher im Boden (24) geführt verschiebbar ist und ein erstes Ende (36a), das sich unterhalb des Bodens (24) befindet, und ein zweites Ende (36b) aufweist, das sich gegen die korrespondierende Klappe (35) stützt.

6. Vorrichtung gemäß irgendeinem der Ansprüche 3 bis 5, **dadurch gekennzeichnet, dass** die Klappen (35) eine zueinander komplementäre Form haben, um die zentrale Öffnung (34) in der Geschlossen-Position zu verschließen.

7. Vorrichtung gemäß Anspruch 6, **dadurch gekennzeichnet, dass** jede Klappe (35) aus einer dreieckigen Platte (37) geformt ist, deren Basis (37a) gelenkig auf dem Boden (24) montiert ist.

8. Vorrichtung gemäß irgendeinem der Ansprüche 2 bis 7, **dadurch gekennzeichnet, dass** der in der Haube integrierte Hebemechanismus einen Laufwagen (29) aufweist, welcher mittels Verschiebens im Körper (22) der Haube (20) durch eine Handhabungsbaugruppe (30, 31) bewegbar ist.

9. Vorrichtung gemäß irgendeinem der vorhergehenden Ansprüche, **dadurch gekennzeichnet, dass** sie zwischen dem Indexierungstisch (50) und dem Transportbehälter (1) ein Adapterstück (51) aufweist, dessen Innenseite ein Profil hat, welches mit dem Umfangsrand des Behälters (1) korrespondiert, und dessen Außenseite an die Standardabmessungen des Indexierungstischs (50) angepasst ist.

10. Vorrichtung gemäß irgendeinem der vorhergehenden Ansprüche, **dadurch gekennzeichnet, dass** der Indexierungstisch (50) aufweist ein Umfangsstützteil (52), welches auf dem Adapterstück (51) platziert ist, einen primären Deckel (55), welcher im Inneren des Stützteils (52) drehbar ist, einen zweiten Deckel (56), welcher im Inneren des ersten Deckels (55) drehbar ist, und einen dritten Deckel (57), welcher auf dem zweiten Deckel (56) drehbar ist und einen Aufnahmerahmen für die Haube (20) bildet, wobei der zweite und der dritte Deckel (56, 57) mit dem Inneren des Behälters (1) durch eine Öffnung (60, 61) kommunizieren.

11. Vorrichtung gemäß Anspruch 10, **dadurch gekennzeichnet, dass** die Achse A des ersten Deckels (55) zur Achse des Behälters (1) korrespondiert, die Achse C des dritten Deckels (57) zur Achse der am weitesten außerhalb gelegenen Zelle (2) im Behälter (1) korrespondiert und die Achse B des zweiten Deckels (56) in gleicher Distanz zu den Achsen der zwei anderen Deckel (55, 57) liegt.

12. Vorrichtung gemäß Anspruch 10 oder 11, **dadurch gekennzeichnet, dass** der Boden des dritten Deckels (57) um die Öffnung (61) herum einen Rand (62) zum Stützen des ersten Endes von jedem Bewegungselement (36) aufweist.

13. Vorrichtung gemäß irgendeinem der Ansprüche 10 bis 12, **dadurch gekennzeichnet, dass** der zweite Deckel (56) unter dem dritten Deckel (57) eine Muffe (65) aufweist, welche eine axiale Passage (66) aufweist, die mit den Öffnungen (60, 61) dieser Deckel (56, 57) in Kommunikation ist, wobei die axiale Passage (61) einen Inspektionsbereich für die zu verlagernde Brennstoffanordnung (3) bestimmt und mit Mitteln zur Visualisierung und zur Beleuchtung ausgestattet ist.

14. Verwendung der Vorrichtung zur Handhabung gemäß irgendeinem der vorhergehenden Ansprüche zur trockenen Entladung von Kernbrennstoffanordnungen (3), welche in den Zellen (2) eines Transportbehälters (1) eingelagert sind.

15. Verwendung der Vorrichtung zur Handhabung gemäß irgendeinem der Ansprüche 1 bis 13 zur trockenen Beladung von Kernbrennstoffanordnungen (3) in die Zellen (2) eines Transportbehälters (1).

## Claims

1. A device for the dry handling of nuclear fuel assemblies (3), comprising:
- a transfer basket (20) which can be connected to lifting means (6), and
- an indexing table (50) which can be placed on a cask (1),
**characterized in that** the transfer basket (20) comprises an inner member (28) for gripping the fuel assembly (3) to be transferred on the one hand, supported by a lifting mechanism (29, 30, 31) built inside the basket, and a bottom (24) provided with valves (35) pivoting between an open position for the passage of the fuel assembly (3) to be transferred and a closed position of the basket (20), on the other hand, and **in that** the indexing table (50) comprises means (51, 52, 55, 56, 57) for positioning the basket (20) on a slot (2) of said cask (1) and orienting the gripping member (28) supported by said basket (20) relative to said fuel assembly (3).

2. The device according to claim 1, **characterized in that** the basket (20) comprises an upper portion (21) including a double attachment system (25, 26) with a hook for lifting means (6), a body (22) containing the built-in lifting mechanism (29, 30, 31) bearing the gripping member (28) and a lower portion (23) formed by the bottom (24) provided with said valves (35).

3. The device according to claim 1 or 2, **characterized in that** the bottom (24) of the basket (20) includes a central opening (34) for the passage of the gripping member (28) and the fuel assembly (3) in the open position of the valves (35).

4. The device according to any one of the preceding claims, **characterized in that** each valve (35) is placed above the bottom (24) and is associated with at least one movement element (36) between said open and closed positions.

5. The device according to claim 4, **characterized in that** said at least one movement element is formed by at least one pin (36) sliding in the bottom (24) and including a first end (36a) situated below the bottom (24) and a second end (36b) bearing against the corresponding valve (35).

6. The device according to any one of claims 3 to 5, **characterized in that** the valves (35) have mutually complementary shapes to cover the central opening (34) in the closed position of said valves.

7. The device according to claim 6, **characterized in that** each valve (35) is formed by a triangular plate (37) whereof the base (37a) is hingedly mounted on the bottom (24).

8. The device according to any one of claims 2 to 7, **characterized in that** the lifting mechanism built into the basket comprises a carriage (29) movable by sliding of the basket (20) in the body (22) by means of a handling assembly (30, 31).

9. The device according to any one of the preceding claims, **characterized in that** it includes, between the indexing table (50) and the cask (1), an adaptor part (51) whereof the inner surface has a profile conjugated to the peripheral edge of the cask (1) and the outer face of which is adapted to the standard dimensions of the indexing table (50).

10. The device according to any one of the preceding claims, **characterized in that** the indexing table (50) comprises a peripheral support piece (52) placed on the adaptor piece (51), a first stopper (55) rotating inside the support piece (52), a second stopper (56) rotating inside the first rotating stopper (55), and a third stopper (57) rotating on the second stopper (56) and forming a carrier for receiving the basket (20), the second and third stoppers (56, 57) communicating with the inside of the cask (1) by an opening (60, 61).

11. The device according to claim 10, **characterized in that** the axis A of the first stopper (55) corresponds to the axis of the cask (1), the axis C of the third stopper (57) corresponds to the axis of the most extreme slot (2) in the cask (1), and the axis B of the second stopper (56) is situated at an equal distance from the axes of the other two stoppers (55, 57).

12. The device according to claim 10 or 11, **characterized in that** the bottom of the third stopper (57) includes, around the opening (61), a bearing rim (62) for the first end of each movement element (36).

13. The device according to any one of claims 10 to 12, **characterized in that** the second stopper (56) includes, below the third stopper (57), a sleeve (65) including an axial passage (66) communicating with the openings (60, 61) of those stoppers (56, 57), the axial passage (61) determining an inspection area of the fuel assembly (3) to be transferred and being provided with display and lighting means.

14. A use of the handling device according to any one of the preceding claims for the dry unloading of nuclear fuel assemblies (3) stored in slots (2) of a cask (1).

15. A use of the handling device according to any one of claims 1 to 13 for the dry loading of nuclear fuel assemblies (3) stored in slots (2) of a cask (1).
